# EUROPÄISCHE PATENTSCHRIFT

(11) **EP 1 090 811 B1**
(45) Veröffentlichungstag und Bekanntmachung des Hinweises auf die Patenterteilung: **21.05.2003**
(21) Anmeldenummer: 00120357.9
(22) Anmeldetag: 16.09.2000
(51) Int. Cl.: B60R 9/058, B60R 9/04

(54) **Dachreling für Fahrzeuge und Herstellungsverfahren**
Roof rails for vehicles and method for the production thereof
Rails de toit pour véhicules et ses procédés de fabrication

(30) Priorität: 08.10.1999 DE 19948475
(43) Veröffentlichungstag der Anmeldung: 11.04.2001
(73) Patentinhaber: JAC Products Deutschland GmbH, 42285 Wuppertal (DE)
(72) Erfinder: Becker, Herbert, 42399 Wuppertal (DE); Kolodziej, Klaus, 42329 Wuppertal (DE); Lumpe, Karl-Heinz, 45549 Spröckhövel (DE)
(74) Vertreter: Rehders, Jochen, Dipl.-Ing.

(56) Entgegenhaltungen:
- DE-A- 4 223 898
- DE-A- 19 732 288
- US-A- 5 676 291
- US-A- 5 715 981

## Beschreibung

Die Erfindung bezieht sich auf eine Dachreling für Fahrzeuge mit einem rohrförmigen Galeriestab und mit an den Enden desselben angeordneten, auf einem Fahrzeugdach abstützbaren Relingfüßen, die jeweils einstückig mit dem Galeriestab ausgebildet sind und aus abgebogenen und aufgeweiteten Endbereichen des Galeriestabs bestehen. Die Erfindung bezieht sich ferner auf ein Verfahren zum Herstellen einer solchen Dachreling.

Eine Dachreling der vorgenannten Art ist in der DE 42 23 898 A1 gezeigt. Diese bekannte Dachreling genügt den Anforderungen der Abnehmerschaft in bezug auf eine aerodynamische und stylistische Gestaltung nicht im ausreichenden Maße.

Der Erfindung liegt daher die Aufgabe zugrunde, der Abnehmerschaft eine ihren Anforderungen gerecht werdende Dachreling zur Verfügung zu stellen, die also die Wünsche hinsichtlich Aerodynamik und stylistischer Möglichkeiten zu erfüllen vermag.

Diese Aufgabe wird erfindungsgemäß durch die Maßnahmen gemäß der Patentansprüche 1 und 4 gelöst, während zweckmäßige Ausgestaltungen und vorteilhafte Weiterbildungen der Erfindung in den Unteransprüchen gekennzeichnet sind.

Erfindungsgemäß weist danach der Galeriestab ausgehend vom Übergangsbereich eines Relingfußes bis hin zum Übergangsbereich in den anderen Relingfuß einen sich kontinuierlich vergrößernden Querschnitt auf bzw., vom anderen Ende aus betrachtet, einen sich kontinuierlich verkleinernden Querschnitt auf. Die erfindungsgemäße Dachreling wirkt damit besonders windschnittig und eröffnet darüber hinaus dem Stylisten vielfältige Gestaltungsmöglichkeiten, weil der Galeriestab von Haus aus ein beliebiges Querschnittsprofil aufweisen kann und z.B. nach Art eines Rund-, Oval- oder Kastenrohres ausgebildet ist, wobei die muldenartige Sicke die Herstellbarkeit der Dachreling begünstigt.

Die Maßnahme nach Anspruch 2 bietet den Vorteil, daß die erfindungsgemäße Dachreling ein nur geringes Gewicht aufweist. Durch die Maßnahme nach Anspruch 3 ergibt sich bei kostengünstiger Herstellung eine gute Montierbarkeit der Dachreling auf einem Fahrzeugdach.

Mittels der Lehre nach Anspruch 4 läßt sich eine Dachreling der vorbeschriebenen Art besonders einfach und wirtschaftlich herstellen. Dabei stellt die Verwendung eines eine durchlaufende muldenförmige Sicke aufweisenden rohrförmigen Strangpreßprofils ein besonderes Verfahrensmerkmal dar, weil die Sicke als Dehnfalte wirkt und damit eine zusätzliche Materialbevorratung für die Aufdehnung bei der Umformung bildet. Da die Sicke im Bereich des kleinsten Galeriestabquerschnitts nicht notwendigerweise vollkommen zurückgeformt wird, also über die Länge der Dachreling bereichsweise ganz oder teilweise erhalten bleibt, ist ihre Positionierung im Bereich der Bogeninnenradien besonders sinnvoll, weil sie im montierten Zustand der Dachreling nach unten weist und damit den Augen eines Betrachters entzogen ist. Mit den Verfahrensmerkmalen nach Anspruch 5 haben sich bei durchgeführten Versuchen hervorragende Ergebnisse erzielen lassen.

Ein Ausführungsbeispiel der Erfindung wird im folgenden anhand der Zeichnungen näher erläutert, und es zeigen:
- Fig. 1: die Dachreling in einer Seitenansicht,
- Fig. 2: einen Schnitt A-A nach Fig. 1
- Fig. 3: einen Schnitt B-B nach Fig. 1
- Fig. 4: einen Vertikalschnitt durch den zeichnungsrechtsseitigen Endbereich der Dachreling nach Fig. 1,
- Fig. 5: ein für die Herstellung der Dachreling vorgesehener Profilabschnitt,
- Fig. 6: eine Stirnansicht des Profilabschnitts
- Fig. 7: den Profilabschnitt im vorgebogenen Zustand,
- Fig. 8: den Profilabschnitt im umgeformten Zustand und
- Fig. 9: die Ansicht einer Umformwerkzeughälfte zum Umformen des vorgebogenen Profilabschnitts.

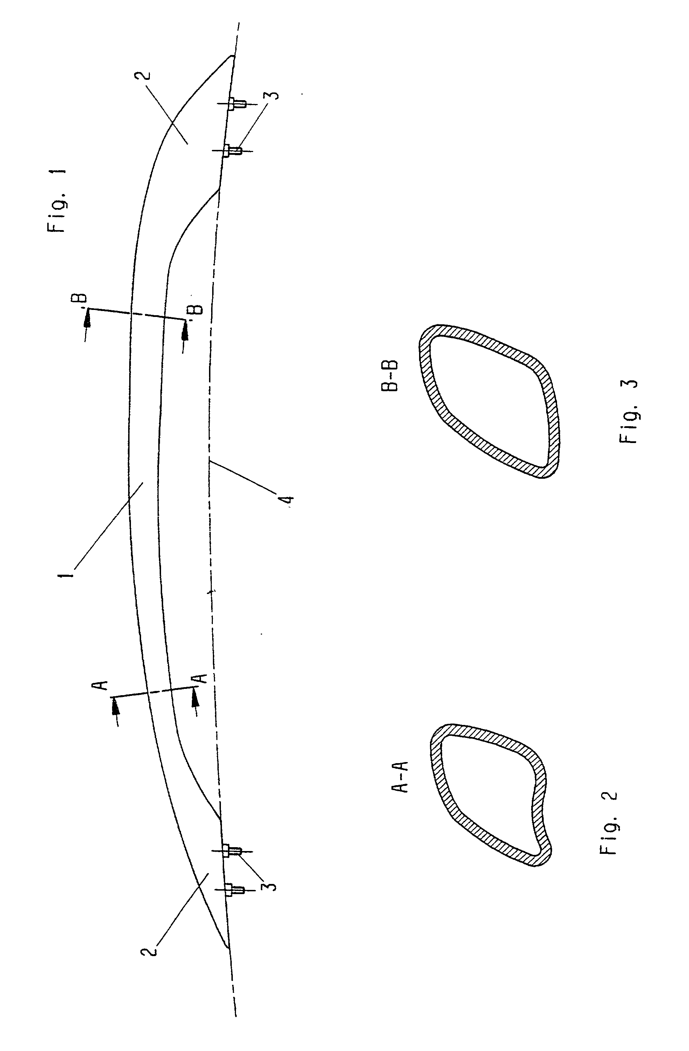

Fig. 1 zeigt eine Dachreling, bestehend aus einem Galeriestab 1 mit an dessen Endbereich angeordneten Relingfüßen 2. Die Dachreling, bestehend aus dem Galeriestab 1 und den Relingfüßen 2 ist einstückig ausgebildet und aus dem Profilabschnitt eines rohrförmigen Strangpreßprofils gefertigt. Die Relingfüße 2 sind mit Befestigungselementen 3 ausgestattet, welche zur Befestigungsanordnung der Dachreling auf einem Fahrzeugdach 4 dienen.

Der zeichnungslinksseitige Relingfuß 2 nach Fig. 1 ist schlanker oder weniger Voluminös als der zeichnungsrechtsseitige ausgebildet. Aufgrunddessen weist der Galeriestab 1 im Übergangsbereich zum zeichnungslinksseitigen Relingfuß 2 einen relativ kleinen Querschnitt nach Fig. 2 und im Übergangsbereich zum zeichnungsrechtsseitigen einen relativ großen Querschnitt nach Fig. 3 auf. Der Galeriestab 1 besitzt also ein kontinuierlich verändertes Querschnittsprofil. An der Unterseite des Galeriestabs 1 befindet sich nach Fig. 2 eine muldenförmige Sicke 5, die noch zu erläutern ist.

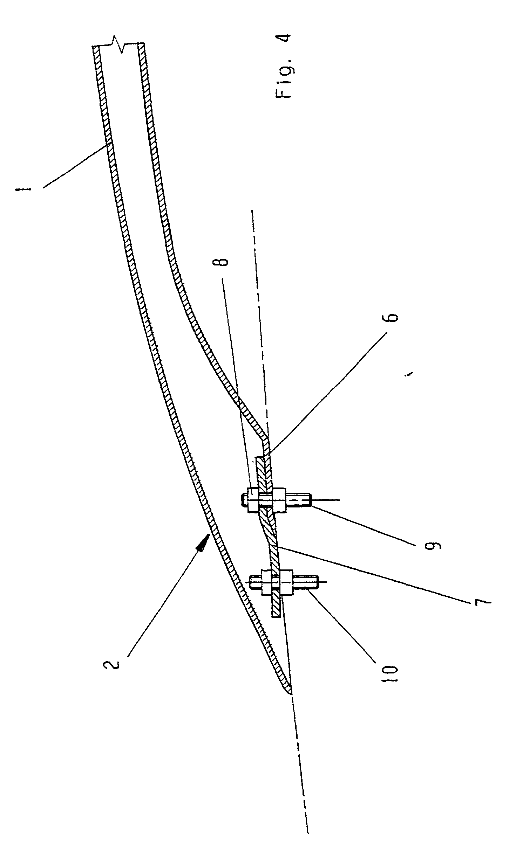

Fig. 4 zeigt einen Endbereich der Dachreling und läßt noch einen axialen Teilbereich des Galeriestabs 1, insbesondere aber einen Relingfuß 2 erkennen. Wie ersichtlich, weist der Relingfuß 2 ausgehend vom Galeriestabübergang bis zum unteren anschraubseitigen Ende eine Aufweitung mit einem stetig anwachsenden Durchmesser auf. Der Relingfuß ist insgesamt bogenförmig und weist ein dem Fahrzeugdach 4 zugewandtes Ende auf. An diesem Ende ist der Relingfuß 2 bereichsweise durch eine Bodenplatte 6 verschlossen, die einstückig mit dem Relingfuß 2 ist. An der Bodenplatte 6 ist ein stabiler Blechstreifen 7, der - wie dargestellt - stufenförmig abgesetzt sein kann, angeordnet. Die Anordnung erfolgt über einen in eine mit dem Blechstreifen 7 verbundene Schweißmutter 8 einschraubbaren Gewindebolzen 9, der auch ggf. zusammen mit einem zweiten Gewindebolzen 10 zur Befestigungsanordnung der Dachreling auf einem Fahrzeugdach 4 dient. Es versteht sich, daß der zweite am anderen Ende des Galeriestabs sitzende Relingfuß eine Fig. 4 entsprechende jedoch hierzu spiegelverkehrte Gestaltung aufweist.

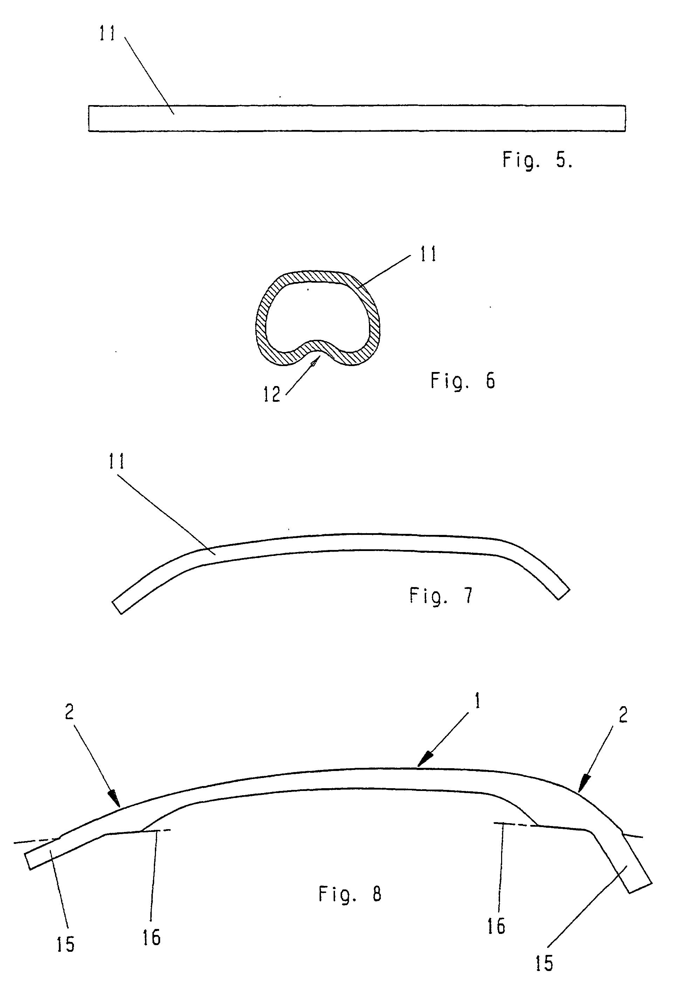

Die Dachreling wird - wie erwähnt - aus dem Profilabschnitt eines Strangpreßprofils gebildet. Ein solcher Profilabschnitt ist in Fig. 5 und 6 gezeigt und mit dem Bezugszeichen 11 versehen. Der Profilabschnitt 11 kann einen in weiten Grenzen beliebigen Querschnitt aufweisen. Ein gängiger Querschnitt für den Galeriestab 1 ist in Fig. 2 und 3 gezeigt. Eine Besonderheit des aus einem Strangpreßprofil endlicher Länge abgelängten Profilabschnitts 11 besteht darin, daß dieser eine längsdurchlaufende muldenartige Sicke 12 aufweist, der die Funktion einer Dehnungsfalte zukommt.

Bei der Herstellung der Dachreling nach Fig. 1 wird wie folgt verfahren: Zunächst wird ein Strangpreßprofil aus vorzugsweise Aluminium od. dgl. Leichtmetall gefertigt, das die erwähnte durchlaufende Sicke 12 aufweist. Von diesem Strangpreßprofil wird ein Profilabschnitt 11 abgelängt, und zwar mit einer für die Fertigung der Dachreling ausreichenden Länge, zuzüglich einer Überlänge, die für den Umformvorgang im Bereich der Relingfüße 2 benötigt wird. Der Profilabschnitt 11 wird sodann, wie in Fig. 7 gezeigt vorgebogen, so daß sich an beiden Endbereichen des Profilabschnitts 11 bogenförmige Endabschnitte ergeben. Bei dem Vorbiegen ist darauf zu achten, daß die Sicke 12 im Bereich der Bogeninnenradien zu liegen kommt.

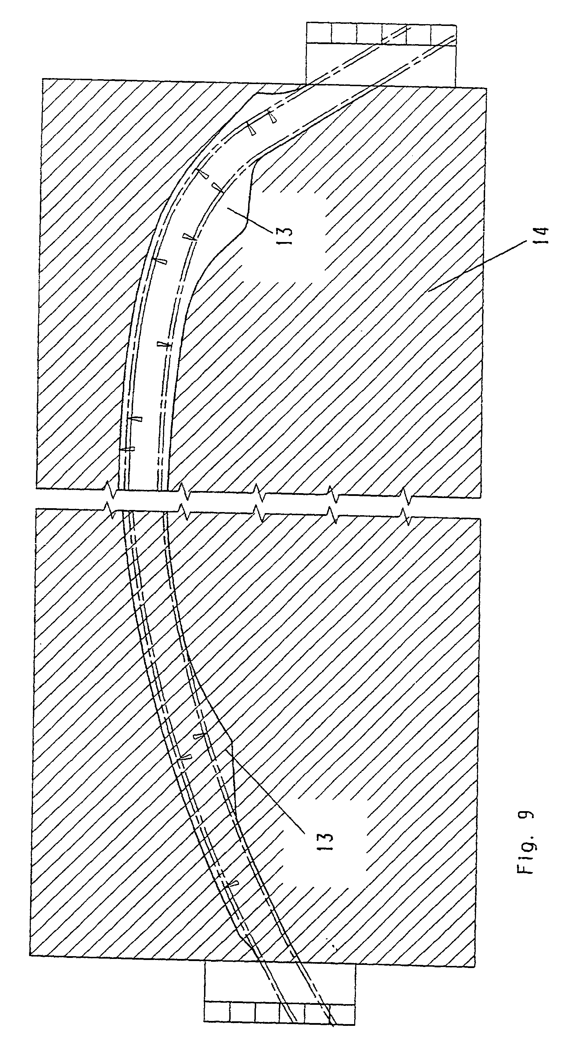

Der so vorbereitete Profilabschnitt 11 wird sodann in die der Form der herzustellenden Dachreling entsprechende Kavität 13 eines Umformwerkzeugs 14 eingelegt. In Fig. 9 ist eine Formhälfte eines Umformwerkzeugs in mehr schematischer Darstellungsmanier gezeigt. Nach dem Schließen des Umformwerkzeugs (Aufsetzen der zweiten Werkzeughälfte mit entsprechender Kavität) wird der Profilabschnitt 11 mit einem Druckmedium, wie Luft, Öl oder bevorzugterweise Wasser beaufschlagt und im Innern des Profilabschnitts ein Innenhochdruck (der zwischen 2.000 und 3.000 bar betragen kann) aufgebaut, wodurch der Profilabschnitt 11 zu einem sich aufweitenden Umformen veranlaßt wird, was durch die kleinen Richtungspfeile in Fig. 9 angedeutet ist. Dem Aufweiten des Profilabschnitts 11 kommt die durchlaufende muldenartige Sicke zugute, da sie als Dehnfalte dient und eine zusätzliche Materialbevorratung zur Verfügung stellt. Gleiches gilt für die Überlänge des Profilabschnitts 11, welche als Materialbevorratung bei der Bildung der Relingfüße 2 dient. Der Umformvorgang ist abgeschlossen sobald der Profilabschnitt 11 mantelseitig vollständig an der Kavitätswandung der zwischen den Umformwerkzeughälften ausgebildeten Kavität anliegt. Alsdann wird der Innenhochdruck wieder abgebaut, das Umformwerkzeug 14 geöffnet und der nunmehr zu einer Dachreling umgeformte Profilabschnitt 11 dem Umformwerkzeug 14 entnommen. Nach dem noch notwendigen Entfernen der verfahrensbedingt verbleibenden Fortsätze 15 entlang der strichpunktierten Schnittlinien 16 verbleibt noch die Bestückung mit den Befestigungselementen, wie zu Fig. 4 erläutert sowie eine optische Aufwertung der Dachreling z.B. ein Eloxiervorgang.

Eine Dachreling der beschriebenen Art kommt jeweils im Doppel auf dem Dach eines Fahrzeugs zur Anordnung, wobei sich jeweils eine Dachreling längs eines Seitenwandbereichs des Fahrzeugdachs und etwa parallel zu diesem erstreckt.

Ergänzend wird noch erwähnt, daß das Umformen des Rohrstücks bevorzugt mittels Wasserdruck (2.000 - 3.0000 bar) und axial aufgebrachten Kräften erfolgt. Bei Einsatz von Rohrstücken aus Aluminium ist noch eine Wärmeauslagerung (180°C, 8 Std.) vorgesehen. Stahl- und Edelstahl-Rohrstücke werden nicht wärmebehandelt.

## Patentansprüche

1. Dachreling für Fahrzeuge, mit einem rohrförmigen Galeriestab (1) und mit an den Enden desselben angeordneten, auf einem Fahrzeugdach (4) abstützbaren Relingfüßen (2), die jeweils einstückig mit dem Galeriestab (1) ausgebildet sind und aus abgebogenen und aufgeweiteten Endbereichen des Galeriestabs (1) bestehen, **dadurch gekennzeichnet, daß** der Galeriestab (1) mit den daran einstückig angeordneten Relingfüßen (2) aus dem Abschnitt eines rohrförmigen Strangpreßprofils, das eine durchlaufende, im Bereich der Bogeninnenradien verlaufende, muldenartige Sicke (12) aufweist, gebildet ist, daß der Galeriestab (1) ausgehend vom Übergangsbereich eines Relingfußes (2) bis hin zum Übergangsbereich in den anderen Relingfuß (2) einen sich kontinuierlich vergrößernden Querschnitt aufweist und daß sich die muldenartige Sicke (2) vom kleinsten Querschnitt aus zum größten Querschnitt hin nach außen aufwölbt.

2. Dachreling nach Anspruch 1, **dadurch gekennzeichnet, daß** dieselbe aus Aluminium oder desgleichen Leichtmetalls besteht.

3. Dachreling nach wenigstens einem der Ansprüche 1 bis 2, **dadurch gekennzeichnet, daß** jeder Relingfuß (2) am unteren Ende bereichsweise durch eine aus dem Material desselben geformte Bodenplatte (6) verschlossen ist und daß an der Bodenplatte (6) ein aus einem Blechstreifen (7) und zumindest einem Gewindebolzen (9, 10) bestehendes Befestigungselement angeordnet ist.

4. Verfahren zum Herstellen einer Dachreling nach zumindest einem der Ansprüche 1 bis 3, **dadurch gekennzeichnet, daß** von einem eine durchlaufende muldenartige Sicke (12) aufweisenden rohrförmigen Strangpreßprofil endlicher Länge eine Profilabschnitt (11) abgelängt wird, daß der Profilabschnitt (11) an seinen beiden Enden abgebogen wird, wobei so vorgegangen wird, daß sich die muldenartige Sicke (12) im Bereich der Bogeninnenradien befindet, daß der so vorgeformte Profilabschnitt (11) in die der Form der herzustellenden Dachreling entsprechende Kavität (13) eines Umformwerkzeugs (14) eingelegt und nach dem Schließen des Umformwerkzeugs (14) mit einem Druckmedium beaufschlagt wird, wobei im Innern des Profilabschnitts (11) ein Innenhochdruck aufgebaut wird, um den Profilabschnitt (11) zu einem sich aufweitenden Umformen bis zur vollständigen Anlage an der Kavitätswanung des Umformwerkzeugs (14) zu veranlasen, wonach der Innenhochdruck wieder abgebaut, da Umformwerkzeug (14) geöffnet und der nunmehr zu einer Dachreling umgeformte Profilabschnitt (11) dem Umformwerkzeug (14) entnommen wird.

5. Verfahren nach Anspruch 4, **dadurch gekennzeichnet, daß** als Druckmedium Wasser verwendet wird und daß der Profilabschnitt (11) mit einem Druck von 2.000 bis 3.000 bar, vorzugweise 2.500 bar beaufschlagt wird.

## Claims

1. A roof rail for vehicles, comprising a tubular gallery bar (1) and rail feet (2) arranged at the ends thereof which can be supported on a vehicle roof (4), which feet are each formed integrally with the gallery bar (1) and consist of bent and widened end regions of the gallery bar (1), **characterised in that** the gallery bar (1) with the rail feet (2) arranged integrally thereon is formed from the section of a tubular extruded profile which has a continuous trough-like bead (12) which extends in the region of the internal radii of the curve, that the gallery bar (1) has a continuously increasing cross-section starting from the region of transition of a rail foot (2) up to the region of transition into the other rail foot (2) and that the trough-like bead (2) arches outwards from the smallest cross-section to the largest cross-section.

2. A roof rail according to Claim 1, **characterised in that** the same is made of aluminium or the same lightweight metal.

3. A roof rail according to at least one of Claims 1 or 2, **characterised in that** each rail foot (2) is closed at the lower end in regions by a base plate (6) formed of the material of the same and that a fastening element consisting of a metal strip (7) and at least one threaded bolt (9, 10) is located on the base plate (6).

4. A method for manufacturing a roof rail according to at least one of Claims 1 to 3, **characterised in that** a profile section (11) is cut off from a tubular extruded profile of finite length having a continuous trough-like bead (12), that the profile section (11) is bent at both ends, the procedure being such that the trough-like bead (12) is located in the region of the internal radii of the curve, that the profile section (11) thus pre-formed is placed in the cavity (13), corresponding to the shape of the roof rail to be manufactured, of a forming tool (14) and is acted upon by a pressure medium once the forming tool (14) has been closed, wherein an internal high pressure is built up in the interior of the profile section (11) in order to subject the profile section (11) to widening forming until it lies completely against the cavity walls of the forming tool (14), after which the internal high pressure is reduced again, the forming tool (14) is opened and the profile section (11) which has now been formed into a roof rail is removed from the forming tool (14).

5. A method according to Claim 4, **characterised in that** water is used as pressure medium and that the profile section (11) is acted upon by a pressure of 2,000 to 3,000 bar, preferably 2,500 bar.

## Revendications

1. Rails de toit pour véhicules comportant une barre de galerie (1) de forme tubulaire ainsi que des pieds (2) disposés aux extrémités de celle-ci et pouvant prendre appui sur le toit (4) d'un véhicule, lesquels pieds sont réalisés chacun d'un seul tenant avec la barre de galerie (1) et sont constitués de zones terminales repliées et élargies de la barre de galerie (1), **caractérisés en ce que** la barre de galerie (1) avec les pieds (2) des rails disposés d'un seul tenant sur celle-ci est formée dans le tronçon d'un profilé extrudé de forme tubulaire qui présente une moulure (12) continue de type auge, s'étendant dans la zone des rayons intérieurs de l'arc, **en ce que**, partant de la zone de transition d'un pied (2) des rails jusqu'à la zone de transition dans l'autre pied (2) des rails, la barre de galerie (1) présente une section transversale augmentant en continu et **en ce que** la moulure (2) de type auge est bombée vers l'extérieur de sa plus petite section transversale vers sa plus grande section transversale.

2. Rails de toit selon la revendication 1, **caractérisés en ce qu'**ils sont constitués d'aluminium ou d'un métal léger identique.

3. Rails de toit selon l'une au moins des revendications 1 ou 2, **caractérisés en ce que** chaque pied (2) des rails est fermé à son extrémité inférieure, par endroits, par une plaque de fond (6) formée dans le même matériau que celui-ci, et **en ce que** sur la plaque de fond (6) est disposé un élément de fixation constitué d'une bande de tôle (7) et d'au moins une tige filetée (9, 10).

4. Procédé de fabrication de rails de toit selon l'une au moins des revendications 1 à 3, **caractérisé en ce que** dans un profilé extrudé de forme tubulaire, présentant une moulure (12) continue de type auge et de longueur finie, on coupe un tronçon profilé (11), **en ce que** le tronçon profilé (11) est replié à ses deux extrémités, et on procède de manière que la moulure (12) de type auge se trouve dans la zone des rayons intérieurs de l'arc, **en ce que** le tronçon profilé (11) ainsi préformé est placé dans la cavité (13), correspondant à la forme des rails à fabriquer, d'un outil de formage (14), et après fermeture de l'outil de formage (14), il est soumis à un fluide sous pression, à l'intérieur du tronçon profilé (11) étant constituée une haute pression interne afin de faire en sorte que le tronçon profilé (11) se déforme en s'élargissant jusqu'à s'appliquer complètement contre la paroi de la cavité de l'outil de formage (14), après quoi la haute pression interne est à nouveau réduite, l'outil de formage (14) est ouvert et le tronçon profilé (11), maintenant déformé en rail de toit, est prélevé de l'outil de formage (14).

5. Procédé selon la revendication 4, **caractérisé en ce qu'**on utilise de l'eau comme fluide sous pression et **en ce que** le tronçon profilé (11) est soumis à une pression de 2 000 à 3 000 bars, de préférence de 2 500 bars.
